# FASCICULE DE BREVET EUROPEEN

(11) **EP 0 468 080 B1**
(45) Date de publication et mention de la délivrance du brevet: **28.12.1994**
(21) Numéro de dépôt: 90114405.5
(22) Date de dépôt: 27.07.1990
(51) Int. Cl.: A47J 31/40

(54) **Procédé d'extraction de cartouches ouvertes de café, cartouche de café et dispositif d'extraction pour la mise en oeuvre du procédé**
Verfahren zur Extraktion von offenen Kaffeekapseln, Kaffeekapsel und Extraktionsvorrichtung zur Durchführung dieses Verfahrens
Method for extracting open coffee-cartridges, coffee-cartridge and extraction device for implementing this method

(43) Date de publication de la demande: 29.01.1992
(73) Titulaire: SOCIETE DES PRODUITS NESTLE S.A., 1800 Vevey (CH)
(72) Inventeur: Fond, Olivier, CH-1400 Yverdon (CH)

(56) Documents cités:
- EP-A- 0 242 556
- DE-U- 7 430 109
- FR-A- 2 182 167
- FR-A- 2 556 323
- FR-A- 2 617 389
- US-A- 2 451 195

## Description

La présente invention est relative à un procédé d'extraction de cartouches ouvertes de café ainsi qu'à une cartouche de café et un dispositif d'extraction pour la mise en oeuvre du procédé.

L'invention concerne plus particulièrement l'extraction, par injection d'eau chaude sous pression, d'un café torréfié moulu contenu dans une cartouche ayant sensiblement la forme d'un tronc de cône.

Le modèle d'utilité GM 7430 109 concerne un dispositif d'extraction de capsule poreuse en papier filtre ne donnant pas un café espresso. Le brevet FR 2617389 concerne également une capsule avec deux faces poreuses qu'on a recouvertes par deux opercules pour le stockage: ces deux opercules doivent être éloignées avant extraction. Le brevet US 2451195 concerne également une capsule constituée par deux feuilles fines de papier poreux, ne subissant aucune extraction sous pression.

L'utilisation de cartouches de café, surtout dans le domaine des cafés type espresso extraits sous pression, est motivée par plusieurs raisons: hygiène, conservation optimale du café, facilité d'usage, meilleure maîtrise de la qualité du café obtenu et bonne reproductibilité des conditions d'extraction.

Les cartouches fermées, s'ouvrant sous l'effet de la pression d'eau injectée répondent à ces exigences.

On connaît ainsi, par exemple par le document EP 242 556, des cartouches qui présentent des zones affaiblies qui se déchirent préférentiellement sous l'effet de la pression.

Cette solution présente le désavantage d'augmenter la complexité et le prix de la cartouche car les matières employées doivent être traitées de manière très précise afin de permettre de réaliser une ouverture à la fois correcte et reproductible.

On connaît par ailleurs, toujours par le document EP 242 556, un dispositif d'extraction, utilisant des cartouches du type décrit ci-dessus et comprenant un corps cylindrique creux ayant une forme intérieure épousant sensiblement la forme extérieure de la cartouche à extraire, ledit corps comportant à sa partie supérieure suivant l'axe dudit cylindre un organe d'injection et sur sa partie extérieure un ressort maintenant une bague pour le dégagement de la cartouche en fin d'extraction. Un tel dispositif permet d'obtenir un café de bonne qualité, mais il n'est utilisable qu'avec un seul type et une forme de cartouche parfaitement adaptable à la forme intérieure du cylindre creux.

Le but de la présente invention est de permettre une extraction du café à partir d'une cartouche contenant du café torréfié moulu qui s'affranchisse de la nécessité d'avoir une zone d'affaiblissement.

Un autre but de la présente invention est de proposer une cartouche de café qui permette de réaliser le procédé selon l'invention.

Un dernier but de la présente invention est de proposer un dispositif d'extraction fonctionnant selon le procédé selon l'invention et qui permette d'utiliser des cartouches de formes différentes.

La présente invention a donc pour objet un procédé d'extraction d'une cartouche ouverte contenant du café torréfié moulu, ladite cartouche comprenant une face supérieure pourvue d'un rebord sur lequel est soudé un opercule et une face inférieure pourvue d'un filtre, dans laquelle on injecte un mélange d'eau et d'air sous pression par un organe d'injection, entouré d'une surface d'étanchéité, qui perce la face supérieure de la cartouche, l'étanchéité lors de l'extraction étant assurée par la compression du rebord circulaire de la cartouche contre la surface d'étanchéité entourant l'organe d'injection, l'injection du mélange d'eau et d'air étant réalisée, à l'intérieur de la cartouche, quelques millimètres au-dessous de la face supérieure de cette dernière, et selon une direction ascendante.

Par cartouche ouverte on entend une cartouche qui n'est pas étanche à l'air extérieur et qui doit donc, si elle nécessite d'être stockée pendant une période de temps assez longue, être emballée dans un sachet individuel étanche ou être revêtue au niveau des ouvertures par un film pelable.

Grâce à ce procédé d'extraction dans lequel le liquide d'extraction est injecté vers le haut, il est possible, avant que les premières gouttes ne s'écoulent de la cartouche, d'obtenir un mouillage parfait du lit de café, ce qui permet ainsi de pouvoir réellement extraire sous pression et, d'autre part, d'éviter l'apparition de chemins préférentiels de circulation du liquide d'extraction qui entraîneraient une extraction insuffisante.

La présente invention a aussi pour object une cartouche ouverte de café pour la mise en oeuvre du procédé selon l'invention comprenant une coupelle avec une paroi latérale ayant sensiblement la forme d'un tronc de cône inversé, ainsi qu'une face supérieure et une face inférieure, la face supérieure comprenant un rebord avec un cordon circulaire sur lequel est soudé un opercule, la face inférieure présentant un filtre séparant le café contenu dans la cartouche de l'air extérieur, ladite cartouche étant telle que le filtre doit résister à une forte variation de pression et a une épaisseur supérieure à celle de la coupelle.

Grâce à cette cartouche qui ne présente plus de zone de faiblesse nécessaire à son ouverture, les caractéristiques de l'extraction ne dépendent plus de la cartouche mais seulement du lit de café qu'elle contient et des conditions d'injection du mélange d'air et d'eau.

La présente invention a enfin pour objet un dispositif d'extraction pour la mise en oeuvre du procédé selon l'invention comprenant, une cage de fixation avec rampes de serrage pour un porte-cartouche, un organe d'injection d'un mélange d'eau et d'air sous pression coaxial à ladite cage de fixation et entouré d'une surface d'étanchéité, un porte-cartouche avec deux pattes de serrage diamétralement opposées, destinées à s'engager contre les rampes de serrage de la cage de fixation, l'organe d'injection d'eau présentant, à une extrémité destinée à venir perforer l'opercule d'une cartouche, des moyens pour injecter le mélange d'air et d'eau sous pression dans une direction ascendante.

Les autres caractéristiques et avantages ressortiront à la lecture de la description qui va suivre, faite en référence aux dessins annexés, donnés uniquement à titre d'exemples non limitatifs et qui représentent:
- La Fig. 1: est une vue schématique en coupe d'une cartouche de café selon l'invention.
- La Fig. 2: est une vue schématique en coupe du dispositif d'extraction selon l'invention.
- La Fig. 3: est une vue de détail d'un élément du dispositif d'extraction selon l'invention, représenté Fig. 2.
- Les Fig. 4, 5 et 6: sont des vues schématiques d'une première variante du dispositif d'extraction représenté Fig. 2.
- Les Fig. 7 et 8: sont des vues schématiques de deux autres variantes du dispositif d'extraction représenté Fig. 2.

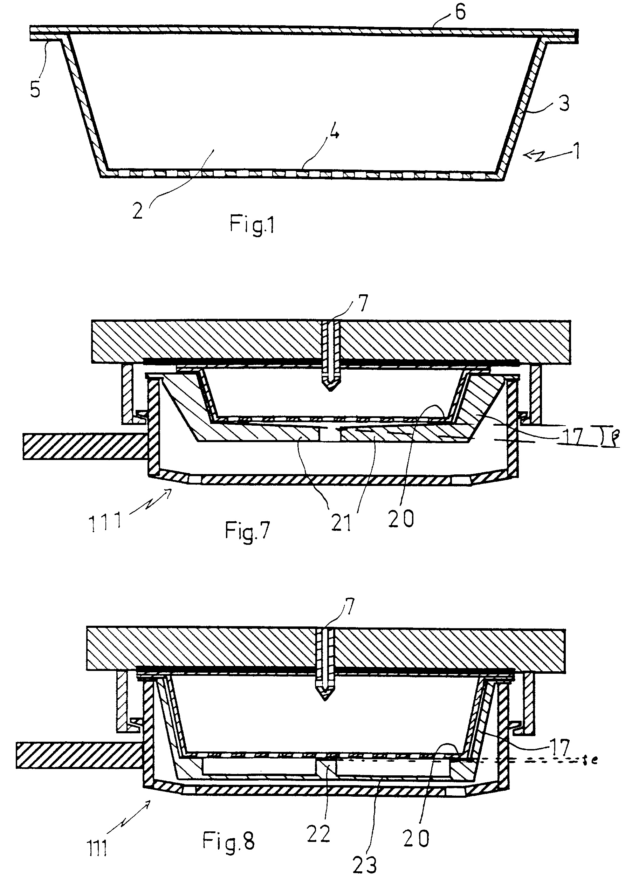

Comme on le voit à la Fig. 1, une cartouche 1 de café est constituée d'une coupelle 2 présentant une paroi latérale 3 et un fond 4.

Sur l'exemple de réalisation représenté, la paroi latérale 3 est tronconique, le diamètre du fond 4 étant inférieur au diamètre de l'ouverture de la coupelle 2. Par tronconique, on entend aussi bien tronconique au sens strict, tel que représenté Fig. 1, qu'un tronc d'ellipsoïde ou de sphère ou même de cylindre.

Cette coupelle 2 présente un rebord 5, externe par rapport à la paroi latérale 3, et situé à l'extrémité de cette paroi 3 opposée à celle jouxtant le fond 4.

Un opercule 6 forme la face supérieure de la cartouche 1. Le rebord 5 de la coupelle 2 se présente sous la forme d'un cordon annulaire qui permet un bon maintien de la cartouche dans son système d'extraction.

Le fond 4 est percé de trous destinés à laisser s'écouler le liquide d'extraction qui ainsi percolé au travers du lit de café situé à l'intérieur de la cartouche. Le fond 4 est ainsi un filtre.

La cartouche 1 selon l'invention est en aluminium ou en plastique compatible dans le domaine alimentaire.

Le filtre constitué par le fond 4 devant résister à une forte variation de pression, il est prévu qu'il ait une épaisseur supérieure à celle de la coupelle 2, à savoir de l'ordre de 100 à 300 µm, de préférence de l'ordre de 200 µm, s'il est en aluminium et de 300 à 1000 µm, s'il est en plastique.

La cartouche 1 selon l'invention peut être de taille variable suivant le volume du café que l'on souhaite préparer. La dose de café contenue peut varier entre 5 et 20 g, le diamètre de la cartouche est compris entre 2,5 et 6 cm et l'épaisseur du lit de café entre 20 et 25 mm.

Dans une forme de réalisation de l'invention, le fond 4 de la coupelle 2 et la paroi 3 forment une seule pièce, dans une autre forme de réalisation de l'invention, la coupelle 2 est constituée par le soudage d'un fond 4 et d'une paroi latérale 3.

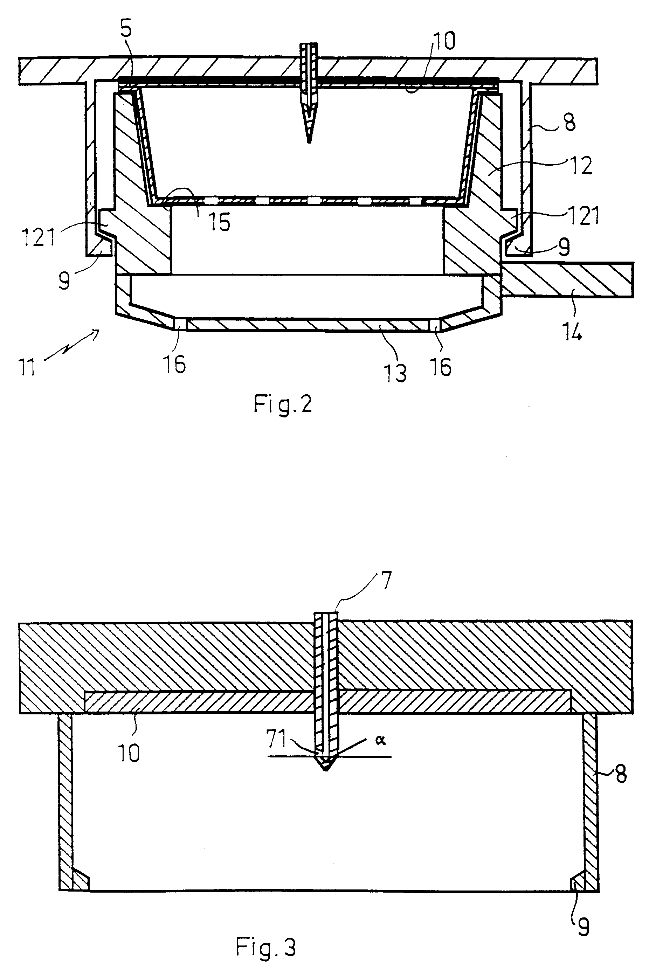

La cartouche de café 1 décrite ci-avant est destinée à être mise en place dans un dispositif d'extraction représenté à la Fig. 2.

Sur la Fig. 3, qui représente un détail du dispositif d'extraction représenté Fig. 2, on voit que le dispositif d'extraction selon l'invention comprend un organe d'injection d'eau 7 comportant des trous 71 de sortie d'eau faisant un angle a avec l'horizontale. Dans le cas de la Fig. 3 cet angle est de 20° mais il peut être compris entre 0 et 25°. Il comprend en outre une cage de fixation 8 avec rampes de serrage 9 situées à l'extrémité inférieure et à une face interne de la cage 8 et, sur le pourtour de l'organe d'injection 7, une surface circulaire plane 10 en caoutchouc pour assurer l'étanchéité lors de l'extraction de la cartouche ouverte 1.

Le système complet d'extraction, représenté Fig. 2, comprend en outre un porte-cartouche 11 constitué d'une enveloppe cylindrique supérieure 12, d'un fond 13 et d'une poignée 14 permettant un maniement aisé du portecartouche.

A la partie inférieure de l'enveloppe cylindrique 12 sont prévues deux pattes de serrage 121 destinées à venir coopérer avec les rampes de serrage 9 de la cage de fixation 8.

En outre, à une face interne de l'enveloppe cylindrique 12, est prévu un rebord circulaire 15 destiné à servir d'appui annulaire périphérique au fond 4 de la cartouche de café 1. De plus, comme on le voit Fig. 2, la partie supérieure de chacune des pattes de serrage du porte-cartouche est destiné à venir comprimer le rebord 5 de la cartouche 1 contre la surface circulaire en caoutchouc 10.

Enfin, ce porte-cartouche 1 présente à son fond des orifices 16 d'écoulement du café extrait.

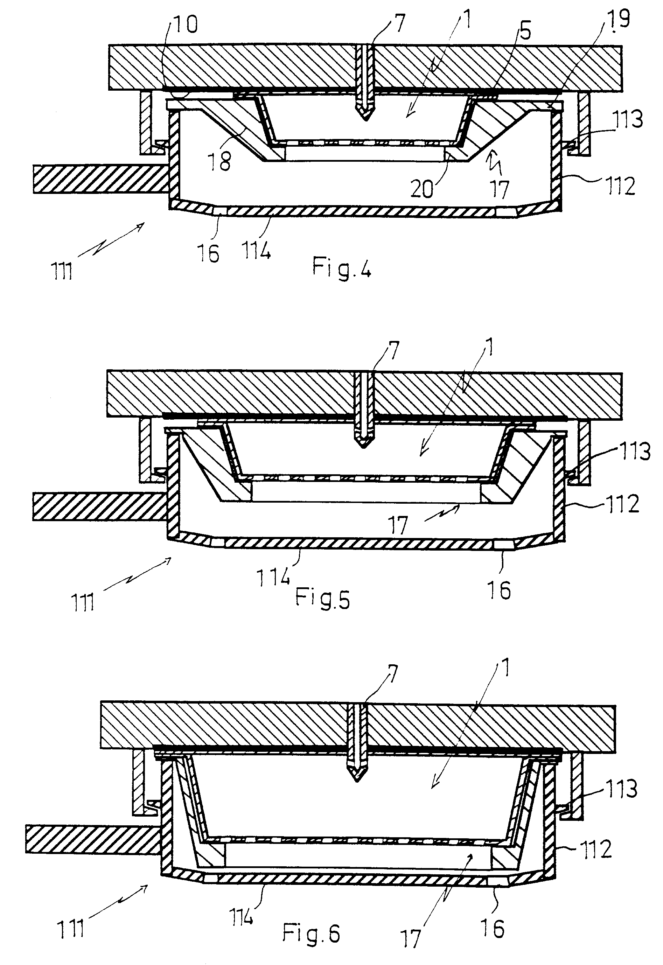

Selon une variante du dispositif d'extraction selon l'invention représentée aux Fig. 4; 5 et 6, le porte-cartouche 11 ne présente plus de rebord circulaire interne. A la place de cela, le porte-cartouche 11 est constitué de deux pièces séparées. La première pièce 111 est constituée d'une enveloppe cylindrique 112, homologue de l'enveloppe 12 du mode de réalisation précédent, munie de pattes de serrage 113 et d'un fond 114.

Un insert 17 interposé entre la première pièce 111 et la surface d'etanchéité 10 constitue la deuxième pièce de ce nouveau porte-cartouche 11.

Cet insert 17 est constitué d'un flanc vertical 18 et d'un rebord annulaire externe supérieur 19 et un rebord annulaire interne inférieur 20, homologue du rebord annulaire interne 15 du dispositif d'extraction représenté Fig. 2.

Il est ainsi ménagé à l'intérieur de l'insert 17 un logement pour une cartouche de café. Ce logement, de forme sensiblement tronconique, est adapté pour recevoir une cartouche de café de forme spécifique.

Grâce à cet insert, il est possible, en conservant une première pièce 111 de forme unique, d'extraire du café à partir de cartouches de forme différentes, l'étanchéité de l'opération d'extraction étant assurée par l'écrasement du rebord 5 de la cartouche de café entre le rebord annulaire externe supérieur 19 de l'insert 17 et la surface circulaire 10 d'étanchéité, la compression étant assurée par le biais de la partie supérieure de l'enveloppe cylindrique 112 de la première pièce 111.

Quelque soit le mode de réalisation choisi, avec ou sans insert 17, il existe aussi une surface annulaire d'appui, constituée soit par le rebord annulaire 15 d'une porte-cartouche 11 soit par le rebord annulaire 20 d'un insert 17, qui ménage ainsi un espace circulaire central en regard du fond 4 d'une cartouche 1.

Ainsi, une cartouche 1 de café est-elle toujours en appui par son rebord 5 sur une surface d'appui correspondante de l'enveloppe cylindrique 12 d'un porte-cartouche 11 ou sur un rebord annulaire 19 d'un insert 17, le fond 4 étant à proximité immédiate d'un rebord annulaire constitué soit par le rebord 15 d'un porte-cartouche 11 soit par le rebord 20 d'un insert 17, un espace circulaire central étant en regard du fond 4.

Selon une variante du dispositif d'extraction selon l'invention représentée Fig. 7, le rebord 20 d'un insert 17 est prolongé, dans le sens radial interne, par des ailettes 21 qui font un angle β avec l'horizontale, ces ailettes 21 étant orientées vers le bas.

Selon une autre variante du dispositif d'extraction selon l'invention représentée Fig. 8, un pointeau 22, placé au centre de l'espace circulaire central ménagé par le rebord annulaire 20, est relié à ce rebord annulaire 20 par des éléments de liaison radiaux 23. La face supérieure 24 de ce pointeau 22 est distante de e du rebord annulaire 20, celui-ci étant le plus haut des deux. Les variantes représentées aux Fig. 7 et 8 ont été décrites par rapport au rebord annulaire 20 d'un insert 17. Il est bien clair que ces variantes sont aussi directement transposables au rebord annulaire 15 d'un porte-cartouche 11.

Ce pointeau et ces ailettes servent de limitateur à l'étirement du fond de la cartouche lors de l'injection du mélange sous pression d'air et d'eau. Ainsi, il est possible d'utiliser des fonds 4, qui servent de filtre, de plus faible épaisseur, ces fonds 4 n'ayant plus à résister à des efforts de traction aussi importants.

Il va maintenant être décrit dans le détail le procédé d'extraction selon l'invention en jonction avec la cartouche de café et le dispositif d'extraction selon l'invention qui viennent d'être décrits.

On dispose une cartouche d'extraction 1 selon l'invention dans le système d'extraction, la cartouche 1 étant soit directement disposée dans un porte-cartouche 11 soit placée dans un insert 17.

Quoiqu'il en soit, le verrouillage du porte-cartouche 11 dans la cage de fixation 8 est assuré par le biais des rampes de serrage 9.

Cette mise en place de la cartouche 1 entraîne la pénétration de l'organe d'injection 7 dans ladite cartouche 1 qui se réalise par déchirement localisé de l'opercule 6.

Les trous 71 de sortie d'eau sont disposés de telle sorte que l'injection d'eau a lieu quelques millimètres en-dessous de l'opercule 6 et sont donc éloignés de la zone de déchirement créée par la pénétration de l'organe d'injection.

L'étanchéité de l'extraction comme précisé ci-avant est assurée par la compression du rebord 5 de la cartouche 1 contre la surface 10 du dispositif d'extraction par le biais de la partie supérieure du porte-cartouche 11.

En étant dirigée vers le haut, l'eau injectée par les trous 71 de l'organe d'injection 7 se réfléchit à la zone supérieure de la cartouche 1 contre la face inférieure de l'opercule 6 et est renvoyée vers le lit de café en étant beaucoup plus dispersée.

Ainsi, l'eau rentre au contact du lit de café après dispersion partielle et non plus sous forme de quelques jets localisés.

Ce phénomène est important durant les premières secondes de l'extraction alors que le lit de café n'est pas stabilisé. De plus, cette dispersion est favorable si l'on souhaite une dispersion et une réduction de l'énergie cinétique de l'eau injectée afin de ne pas compacter trop fortement le lit de café et éviter ainsi un risque de colmatage du lit de café sous une trop grande pression. En ce compactant légèrement, le lit de café dégage de la place dans la cartouche qui est alors prise par l'eau.

Ensuite, pendant le reste de l'extraction, les jets d'eau sont libérés plus ou moins dans ce volume d'eau et en aucun cas, les jets ne sont dirigés directement sur le café.

Au cours de l'extraction, sous l'effet de la poussée hydrostatique provoquée par la perte de charge du lit de café contenu dans la cartouche, la paroi latérale 3 de ladite cartouche tend à se déformer légèrement et le pourtour du fond 4 vient en appui sur le rebord annulaire interne 15 du porte-cartouche 11, ou sur le rebord annulaire interne 20 de l'insert 17, selon le mode de réalisation choisi.

L'appui du fond 4 de la cartouche 1, qui constitue le filtre, contre ce rebord annulaire permet d'utiliser des cartouches avec une paroi latérale de faible épaisseur, l'étirement de la paroi latérale 3 de la cartouche 1 causé par la poussée du fond 4 étant repris par ce rebord annulaire.

Si on veut utiliser des fonds 4 minces, par exemple pour pouvoir utiliser des surfaces de filtration particulières, l'utilisation d'un insert 17, ou d'un porte cartouche 11, présentant un pointeau et/ou des ailettes permet de limiter l'étirement de ce fond 4 en évitant ainsi son déchirement.

Au cours de l'extraction, la paroi latérale 3 de la cartouche peut se déformer mais elle vient immédiatement en appui sur une surface correspondante du porte-cartouche 11 ou de l'insert 17 ce qui l'empêche elle aussi de se déchirer.

La présente invention permet ainsi de réaliser une extraction de cartouches de café ouvertes en autorisant par ailleurs l'utilisation de cartouches de formes différentes dans un même dispositif d'extraction.

## Revendications

1. Procédé d'extraction d'une cartouche ouverte contenant du café torréfié moulu, ladite cartouche comprenant une face supérieure pourvue d'un rebord sur lequel est soudé un opercule et une face inférieure pourvue d'un filtre, dans laquelle on injecte un mélange d'eau et d'air sous pression par un organe d'injection, entouré d'une surface d'étanchéité, qui perce la face supérieure de la cartouche, l'étanchéité lors de l'extraction étant assurée par la compression du rebord circulaire de la cartouche contre la surface d'étanchéité entourant l'organe d'injection, l'injection du mélange d'eau et d'air étant réalisée, à l'intérieur de la cartouche, quelques millimètres au-dessous de la face supérieure de cette dernière, et selon une direction ascendante.

2. Procédé selon la revendication 1, dans lequel, lors de l'extraction, le filtre est en appui contre un limitateur d'étirement.

3. Cartouche ouverte (1) contenant du café pour la mise en oeuvre du procédé selon l'une des revendications précédentes, comprenant une coupelle (2) avec une paroi latérale (3) ayant sensiblement la forme d'un tronc de cône inversé ainsi qu'une face supérieure (6) et une face inférieure (4), la face supérieure (6) comprenant un rebord (5) sur lequel est soudé un opercule (6), la face inférieure (4) présentant un filtre séparant le café contenu dans la cartouche de l'air extérieur, ladite cartouche étant caractérisée en ce que le filtre doit résister à une forte variation de pression et a une épaisseur supérieure à celle de la coupelle (2).

4. Dispositif d'extraction utilisant une cartouche de café selon la revendication 3 pour la mise en oeuvre du procédé selon l'une des revendications 1 ou 2 comprenant une cage de fixation (8) avec rampes de serrage (9) pour un porte-cartouche (11), un organe d'injection (7) d'un mélange d'eau et d'air sous pression coaxial à ladite cage de fixation (8) et entouré d'une surface d'étanchéité (10), un porte-cartouche (11) avec deux pattes de serrage (121, 113) diamétralement opposées, destinées à s'engager contre les rampes de serrage (9) de la cage de fixation (8), l'organe d'injection (7) d'eau présentant, à une extrémité destinée à venir perforer l'opercule (6) d'une cartouche (1), des moyens (71) pour injecter le mélange d'air et d'eau sous pression dans une direction ascendante.

5. Dispositif d'extraction selon la revendication 4 dans lequel l'organe d'injection comporte des trous (71) de sortie d'eau faisant un angle α compris entre 0° et 25° avec l'horizontale.

6. Dispositif d'extraction selon la revendication 4 dans lequel le porte-cartouche (11) est constitué d'une première pièce (111) présentant une enveloppe cylindrique (112) munie de pattes de serrage (113) et un fond (114) et d'une deuxième pièce, constituée d'un insert ( 17), interposée entre la première pièce (111) et la surface d'étanchéité (10).

7. Dispositif d'extraction selon l'une des revendications précédentes dans lequel le porte-cartouche (11) lui-même ou l'insert (17) présente un rebord annulaire interne (15, 20) délimitant un espace circulaire central en regard du fond (4) de la cartouche (1) présentant des moyens servant de limitateur à l'étirement du fond (4) lors de l'injection sous pression du mélange d'air et d'eau dans la cartouche (1).

## Claims

1. A process for the extraction of an open cartridge containing roasted and ground coffee, the cartridge comprising an upper face provided with a flange to which a lid is welded and a lower face provided with a filter, in which a mixture of water and air is injected under pressure by an injector which is surrounded by a sealing surface and which pierces the upper face of the cartridge, imperviousness during extraction being established by compression of the circular flange of the cartridge against the sealing surface surrounding the injector, the mixture of water and air being injected within the cartridge a few millimetres below the upper surface thereof and in an ascending direction.

2. A process as claimed in claim 1, in which the filter is in contact with a stretching limiter during the extraction step.

3. An open cartridge (1) containing coffee for carrying out the process claimed in any of the preceding claims, comprising a cup (2) with a lateral wall (3) substantially frustoconical in shape and an upper face (6) and a lower face (4), the upper face (6) comprising a flange (5) to which a lid (6) is welded and the lower face (4) comprising a filter separating the coffee contained in the cartridge from the outside air, characterized in that the filter has to withstand a considerable variation in pressure and has a greater thickness than the cup (2).

4. An extraction device using the coffee cartridge claimed in claim 3 for carrying out the process claimed in claim 1 or 2, comprising a fixing cage (8) with retaining ramps (9) for a cartridge holder (11), an injector (7) for injecting a mixture of water and air under pressure which is coaxial with the fixing cage (8) and which is surrounded by a sealing surface (10), a cartridge holder (11) with two diametrically opposite retaining lugs (121,113) which are intended to cooperate with the retaining ramps (9) of the fixing cage (8), the water injector (7) comprising means (71) for injecting the mixture of air and water under pressure in an ascending direction at an end intended to perforate the lid (6) of a cartridge (1).

5. An extraction device as claimed in claim 4, in which the injector comprises water outlet holes (71) forming an α of 0° to 25° with the horizontal.

6. An extraction device as claimed in claim 4, in which the cartridge holder (11) is formed by a first part (111) comprising a cylindrical envelope (112) provided with retaining lugs (113) and a base (114) and by a second part consisting of an insert (17) interposed between the first part (111) and the sealing surface (10).

7. An extraction device as claimed in any of the preceding claims in which the cartridge holder (111) itself or the insert (17) comprises an inner annular flange (15,20) defining a central circular space opposite the base (4) of the cartridge (1) comprising means for limiting the stretching of the base (4) during the injection under pressure of the mixture of air and water into the cartridge (1).

## Patentansprüche

1. Verfahren zur Extraktion einer gerösteten und gemahlenen Kaffee enthaltenden, offenen Portionspackung, die eine Oberseite mit einem abgewinkelten Rand, auf dem ein Deckel angeschweißt ist, und eine mit einem Filter versehene Unterseite besitzt und in die eine Mischung aus Wasser und Luft unter Druck durch ein Einspritzorgan eingespritzt wird, das von einer Dichtungsfläche umgeben ist und die Oberseite der Portionspackung durchbohrt, wobei die Abdichtung bei der Extraktion durch das Andrücken des kreisförmigen abgewinkelten Rands der Portionspackung an die das Einspritzorgan umgebende Dichtungsfläche gewährleistet wird und die Einspritzung der Mischung aus Wasser und Luft im Inneren der Portionspackung einige Millimeter unter deren Oberseite und in einer aufsteigenden Richtung vorgenommen wird.

2. Verfahren nach Anspruch 1, in dem der Filter bei der Extraktion an einem Aufweitungsbegrenzer in Anlage ist.

3. Kaffee enthaltende, offene Portionspackung (1) zur Durchführung des Verfahrens nach einem der vorhergehenden Ansprüche, umfassend eine Schale (2) mit einer Seitenwand (3), die im wesentlichen die Form eines umgekehrten Kegelstumpfes hat, sowie einer Oberseite (6) und einer Unterseite (4), wobei die Oberseite (6) einen abgewinkelten Rand (5) besitzt, an dem ein Deckel (6) angeschweißt ist, die Unterseite (4) ein Filter aufweist, das den in der Portionspackung enthaltenen Kaffee von der Außenluft trennt, und diese Portionspackung dadurch gekennzeichnet ist, daß das Filter einer starken Druckänderung standhalten muß und eine größere Dicke als die Schale (2) besitzt.

4. Extraktionsvorrichtung für die Durchführung des Verfahrens nach einem der Ansprüche 1 oder 2 unter Verwendung einer Kaffee-Portionspackung nach Anspruch 3, umfassend einen Befestigungskäfig (8) mit Klemmrampen (9) für einen Portionspackungshalter (11), ein zum Befestigungskäfig (8) koaxiales und von einer Dichtungsfläche (10) umgebenes Organ (7) zum Einspritzen einer Mischung aus Wasser und Luft unter Druck, einen Portionspackungshalter (11) mit zwei diametral einander entgegengesetzten Klemmlappen (121, 113), die dazu bestimmt sind, an den Klemmrampen (9) des Befestigungskäfigs (8) in Eingriff zu kommen, wobei das Organ (7) zum Einspritzen von Wasser an einem Ende, das dazu bestimmt ist, den Deckel (6) einer Portionspackung (1) zu durchbohren, Mittel (71) zum Einspritzen der Mischung aus Wasser und Luft unter Druck in einer aufsteigenden Richtung aufweist.

5. Extraktionsvorrichtung nach Anspruch 4, bei der das Einspritzorgan Wasseraustrittslöcher (71) besitzt, die mit der Horizontalen einen Winkel von 0° bis 25° bilden.

6. Extraktionsvorrichtung nach Anspruch 4, bei der der Portionspackungshalter (11) aus einem ersten Teil (111), das einen mit Klemmlappen (113) versehenen zylindrischen Mantel (112) und einen Boden (114) besitzt, und aus einem zweiten, aus einem Einsatz (17) bestehenden Teil besteht, das zwischen das erste Teil (111) und die Dichtungsfläche (10) eingesetzt ist.

7. Extraktionsvorrichtung nach einem der vorhergehenden Ansprüche, bei dem der Portionspackungshalter (11) selbst oder der Einsatz (17) einen ringförmigen abgewinkelten Innenrand (15, 20) besitzt, der gegenüber dem Boden (4) der Portionspackung (1) einen zentralen kreisförmigen Raum abgrenzt, der Mittel aufweist, die zur Begrenzung der Aufweitung des Bodens (4) bei der Einspritzung der Mischung aus Luft und Wasser unter Druck in die Portionspackung (1) dient.
